# FASCICULE DE BREVET EUROPEEN

(11) **EP 2 909 070 B1**
(45) Date de publication et mention de la délivrance du brevet: **05.12.2018**
(21) Numéro de dépôt: 13785514.4
(22) Date de dépôt: 01.10.2013
(51) Int. Cl.: B60W 30/18, F16H 63/30

(54) **ENSEMBLE DE TRANSMISSION POUR ENGIN AUTOMOTEUR ET ENGIN EQUIPÉ D'UNE TELLE TRANSMISSION**
GETRIEBEANORDNUNG FÜR EINE SELBSTFAHRENDE MASCHINE UND MIT EINEM SOLCHEN GETRIEBE AUSGESTATTETE MASCHINE
TRANSMISSION ASSEMBLY FOR A SELF-PROPELLED MACHINE, AND MACHINE FITTED WITH SUCH A TRANSMISSION

(30) Priorité: 18.10.2012 FR 1259918
(43) Date de publication de la demande: 26.08.2015
(73) Titulaire: France Reducteurs, 85500 Les Herbiers (FR)
(72) Inventeur: BRAY, Sébastien, F-85590 Les Epesses (FR); BLANCHARD, Robert, F-85510 Le Boupere (FR)
(74) Mandataire: Godineau, Valérie
(86) Numéro de dépôt international: PCT/FR2013/052328
(87) Numéro de publication internationale: WO 2014/060675

(56) Documents cités:
- EP-A1- 0 027 513
- FR-A1- 2 892 080
- GB-A- 677 753
- GB-A- 789 165
- GB-A- 920 077
- US-B1- 6 364 794

## Description

La présente invention concerne un ensemble de transmission pour engin automoteur, ainsi qu'un engin équipé d'une telle transmission.

EP0027513 divulgue la préambule de la revendication 1.

Elle concerne plus particulièrement un ensemble de transmission du type positionnable entre l'arbre primaire moteur et les roues dudit engin, et comprenant, un boîtier de transmission équipé d'un arbre d'entrée et d'un arbre de sortie, tel que l'arbre d'entraînement des roues de l'engin, un arbre, dit menant, relié audit arbre d'entrée formant l'arbre mené par une transmission sans fin à courroie et, disposés entre l'arbre d'entrée et l'arbre de sortie, pour la transmission du mouvement de l'arbre d'entrée à l'arbre de sortie, des moyens de transmission comprenant un mécanisme inverseur de sens d'entraînement en rotation de l'arbre de sortie, et un mécanisme d'embrayage, chaque mécanisme comportant une commande, lesdites commandes d'inversion de sens et d'embrayage portées par ledit boîtier, étant montées respectivement mobiles l'une , entre au moins trois positions à savoir une position neutre, une position marche avant et une position marche arrière, l'autre, entre au moins une position embrayée et une position débrayée.
Les petits engins automoteurs de type tracteur de tonte se sont largement développés ces dernières années sur le marché. De tels engins automoteurs comportent généralement un mécanisme d'embrayage et un mécanisme d'inversion de sens de déplacement de l'engin. Le mécanisme d'embrayage est destiné à protéger le mécanisme d'inversion de sens et à permettre notamment une inversion de sens de déplacement de l'engin sans à-coup. Ce mécanisme d'embrayage est indispensable lorsque le dispositif d'inversion de sens est un dispositif d'inversion de sens non progressif du type par exemple à crabotage ou par engrènement. Les engins équipés de tels mécanismes sont équipés d'un organe de commande d'embrayage actionnable par le conducteur et d'un organe de commande d'inversion de sens de déplacement de l'engin actionnable également par le conducteur, ces organes de commande étant des organes de commande distincts. Il en résulte pour le conducteur la nécessité d'agir d'une part sur l'organe de commande d'inversion de sens lorsqu'il souhaite inverser le sens de l'engin, d'autre part, sur l'organe de commande d'embrayage qui est généralement associé à la variation de vitesse lorsqu'il souhaite entraîner en déplacement l'engin et éventuellement faire varier la vitesse de l'engin. La présence de deux organes de commande différenciés peut amener, dans certains cas, à des erreurs de manoeuvre du conducteur lorsque l'ordre d'actionnement des différents organes de commande n'est pas respecté. Si l'engin automoteur est équipé d'un dispositif d'inversion de sens à crabotage, il en résulte, en cas de fausse manoeuvre du conducteur, des à-coups violents lors de l'inversion de sens, voire même un risque de casse de la transmission.

Pour éviter de tels problèmes, aujourd'hui, les engins automoteurs peuvent être équipés de mécanisme d'inversion de sens de type progressif. Il en résulte une augmentation du coût de tels engins. Il existe également des mécanismes de synchronisation des commandes d'inversion de sens et d'embrayage, ces mécanismes étant de conception complexe et d'encombrement important.

Enfin, il existe des ensembles de transmission incluant une interaction entre la commande de frein et la commande unique de variation de vitesse, d'embrayage et d'inversion de sens comme illustré dans le document EP-0027513 ou entre la commande d'inversion de sens en position de marche arrière et le variateur de vitesse comme illustré dans le document US-6.364.794 dans le but de limiter la vitesse de l'engin en marche arrière.

Un but de la présente invention est donc de proposer un ensemble de transmission dont la conception permet d'éviter toute fausse manoeuvre du conducteur, en particulier lors des opérations d'inversion de sens de déplacement de l'engin, pour permettre une commande de l'inversion de sens du déplacement de l'engin sans à-coup et sans risque de casse.

A cet effet, l'invention a pour objet un ensemble de transmission pour engin automoteur, du type positionnable entre l'arbre primaire moteur et les roues dudit engin, et comprenant un boîtier de transmission équipé d'un arbre d'entrée et d'un arbre de sortie, tel que l'arbre d'entraînement des roues de l'engin, un arbre, dit menant, apte à être entraîné en rotation par l'arbre primaire moteur et relié audit arbre d'entrée formant l'arbre mené par une transmission sans fin à courroie, un mécanisme d'embrayage, et disposés entre l'arbre d'entrée et l'arbre de sortie, pour la transmission du mouvement de l'arbre d'entrée à l'arbre de sortie, des moyens de transmission comprenant un mécanisme inverseur de sens d'entraînement en rotation de l'arbre de sortie, les mécanismes inverseur de sens et d'embrayage comportant chacun une commande, lesdites commandes d'inversion de sens et d'embrayage portées par ledit boîtier, étant montées respectivement mobiles l'une, entre au moins trois positions à savoir une position neutre, une position marche avant et une position marche arrière, l'autre, entre au moins une position embrayée et une position débrayée, caractérisé en ce que la commande d'inversion de sens forme, en position neutre de ladite commande d'inversion de sens, un moyen de blocage de la commande d'embrayage en position débrayée apte à empêcher le passage de la commande d'embrayage de la position débrayée à la position embrayée, et en ce que la commande d'embrayage forme, en position embrayée de la commande d'embrayage, un moyen de verrouillage de la commande d'inversion de sens en position marche avant ou marche arrière, apte à empêcher le passage de la commande d'inversion de sens de la position marche avant ou marche arrière à la position neutre.

Les commandes d'inversion de sens et d'embrayage interagissent entre elles. La commande d'inversion de sens forme, en position neutre de ladite commande d'inversion de sens, un moyen de blocage de la commande d'embrayage en position débrayée pour imposer le passage de la commande d'inversion de sens de la position neutre vers la position marche avant ou la position marche arrière préalablement au passage de la commande d'embrayage de la position débrayée à la position embrayée de sorte que tout à-coup est évité. De même, la commande d'embrayage forme, en position embrayée de la commande d'embrayage, un moyen de verrouillage de la commande d'inversion de sens en position marche avant ou marche arrière pour imposer le passage de la commande d'embrayage de la position embrayée à la position débrayée, préalablement à la commande d'inversion de sens de la position marche avant ou marche arrière à la position neutre de sorte que tout risque de casse est évité. Cette conception permet ainsi d'imposer une cinématique de fonctionnement des commandes d'inversion de sens et d'embrayage. Comme les commandes sont portées par le boîtier, il en résulte une compacité de l'ensemble.

De préférence, la commande d'embrayage et la commande d'inversion de sens comprennent chacune au moins une pièce mobile. La ou une pièce mobile de la commande d'inversion de sens est une pièce commandée couplable par un moyen de transmission de mouvement à un organe de commande actionnable par l'opérateur pour le déplacement de ladite commande entre les positions neutre, marche avant et marche arrière, et la ou une pièce mobile de la commande d'embrayage est une pièce commandée couplable, par un moyen de transmission de mouvement, à un organe de commande actionnable par l'opérateur pour le passage de ladite commande d'embrayage de la position débrayée à la position embrayée et inversement.

De préférence, la ou au moins une pièce mobile de la commande d'inversion de sens est une pièce rotative, telle qu'une came, et la commande d'embrayage forme, en position embrayée, un moyen de blocage en déplacement angulaire de ladite pièce.

De préférence, la ou au moins une pièce mobile de la commande d'embrayage est un levier pivotant, et la commande d'inversion de sens forme, en position neutre, une butée de limitation en déplacement angulaire dudit levier.

L'interaction des commandes d'embrayage et d'inversion de sens s'opère au niveau du boîtier par contact d'appui desdites commandes entre elles de sorte que l'encombrement est réduit.

De préférence, les pièces mobiles de la commande d'embrayage et de la commande d'inversion de sens sont munies respectivement l'une, d'un organe de verrouillage, l'autre, de deux organes de verrouillage complémentaires aptes à coopérer alternativement avec l'organe de verrouillage de la commande d'embrayage, en fonction de la position marche avant ou marche arrière de la commande d'inversion de sens.

Généralement, l'organe de verrouillage de la commande d'embrayage est un organe mâle et les organes de verrouillage complémentaires de la commande d'inversion de sens sont des organes femelles.

De préférence, la ou au moins une pièce mobile de la commande d'embrayage étant un levier pivotant couplable par un moyen de transmission de mouvement à un organe de commande actionnable par l'opérateur pour le passage dudit levier de la position débrayée à la position embrayée et inversement, l'organe mâle de verrouillage affecte la forme d'un plot porté par ledit levier, et la ou au moins une pièce mobile de la commande d'inversion de sens étant une pièce du genre came couplable par un moyen de transmission de mouvement à un organe de commande actionnable par l'opérateur pour le déplacement de ladite commande entre les positions neutre, marche avant et marche arrière, les organes femelles de verrouillage complémentaires de la commande d'inversion affectent chacun la forme d'une encoche ménagée sur le pourtour de la came, l'espace laissé libre entre deux encoches formant, en position neutre de la commande d'inversion de sens la butée de limitation en déplacement angulaire dudit levier.

De préférence, le mécanisme d'embrayage est intégré à la transmission à courroie.

De préférence, la transmission à courroie est du type à variation de vitesse et comprend deux poulies à flasques à écartement variable portées l'une, par l'arbre menant, l'autre, par l'arbre d'entrée, et des moyens de commande en rapprochement ou en écartement des flasques de l'une des poulies, le mécanisme d'embrayage comprend un organe fou apte à coopérer avec le flasque mobile de la poulie menante commandée, cet organe fou, tel qu'un roulement, un galet, ou une bague, présentant une surface montée libre à rotation sur l'arbre porteur de la poulie commandée et autour de laquelle s'enroule au moins partiellement la courroie en position écartée des flasques de la poulie menante commandée de manière à empêcher toute transmission de mouvement entre arbres porte-poulie, le flasque mobile de la poulie menante commandée venant à recouvrement dudit organe fou au cours du rapprochement des flasques de ladite poulie pour permettre l'enroulement de la courroie à l'intérieur de la gorge ménagée par les flasques et autoriser le passage du variateur de vitesse d'une position débrayée à une position embrayée, la poursuite du rapprochement des flasques de la poulie menante commandée permettant de faire varier à volonté la vitesse, et les moyens de commande en rapprochement ou en écartement des flasques de la poulie menante sont au moins partiellement communs à la commande d'embrayage.

Généralement, l'ensemble de transmission comprend en outre un mécanisme de frein de l'arbre d'entrée et/ou de l'arbre de sortie et/ou des moyens de transmission, ledit mécanisme de frein étant équipé d'une commande de frein portée par ledit boîtier, la commande de frein, montée mobile entre au moins une position dite première position de freinage et une position non freinée, étant couplable à un organe de commande de frein actionnable par l'opérateur, pour le passage de ladite commande de frein de la position non freinée à ladite première position de freinage sous l'action dudit organe de commande de frein actionnable par l'opérateur, cette commande de frein présentant une deuxième position de freinage distincte de la première position de freinage, des moyens de rappel de ladite commande de frein en deuxième position de freinage, ces moyens de rappel étant aptes, en position neutre de la commande d'inversion de sens à rappeler la commande de frein en deuxième position de freinage et des moyens d'entraînement en déplacement de la commande de frein de la deuxième position de freinage à la position non freinée, ces moyens d'entraînement en déplacement de la commande de frein étant formés au moins partiellement par la commande d'inversion de sens active pour ladite commande de frein, à l'encontre des moyens de rappel lors du passage de ladite commande d'inversion de sens de la position neutre à la position marche avant ou marche arrière.

A nouveau, cette conception permet une compacité de l'ensemble. En outre, cette conception permet la réalisation automatique d'un frein de parking actif dès que la commande d'inversion de sens est en position neutre de sorte que le conducteur peut s'affranchir de l'actionnement d'un tel frein en position neutre du dispositif d'inversion de sens. Il en résulte un risque d'accident réduit.

De préférence, le mécanisme de frein comporte une commande supplémentaire, dite additionnelle, actionnable par l'opérateur entre une position inactive et une position active, cette commande additionnelle étant, au cours de son activation, apte, en deuxième position de freinage de la commande de frein, à coopérer avec la commande de frein, pour le passage de la commande de frein de la deuxième position de freinage à la position non freinée.

L'invention a encore pour objet un engin automoteur du type comprenant un arbre primaire moteur, des roues et un ensemble de transmission disposé entre l'arbre primaire moteur et les roues, caractérisé en ce que l'ensemble de transmission est du type précité.

L'invention sera bien comprise à la lecture de la description suivante d'exemples de réalisation, en référence aux dessins annexés dans lesquels :
la figure 1 représente une vue en perspective d'un engin équipé d'un ensemble de transmission conforme à l'invention, la carrosserie de l'engin ayant été omise ;

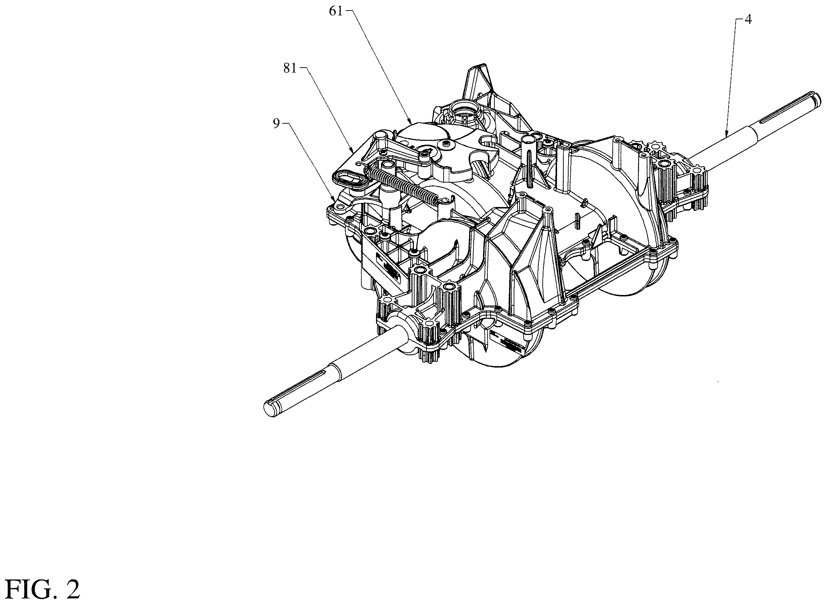

la figure 2 représente une vue en perspective d'un ensemble de transmission conforme à l'invention ;

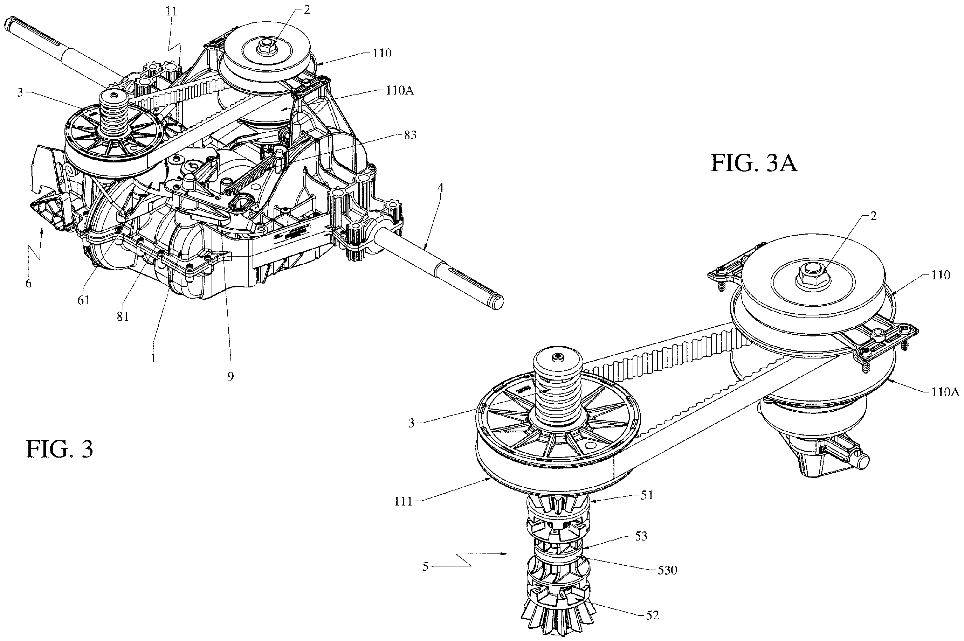

la figure 3 représente une vue en perspective d'un ensemble de transmission conforme à l'invention prise sous un autre angle ;
la figure 3A représente une vue partielle en perspective du mécanisme inverseur et du mécanisme d'embrayage intégré à un mécanisme de variation de vitesse ;

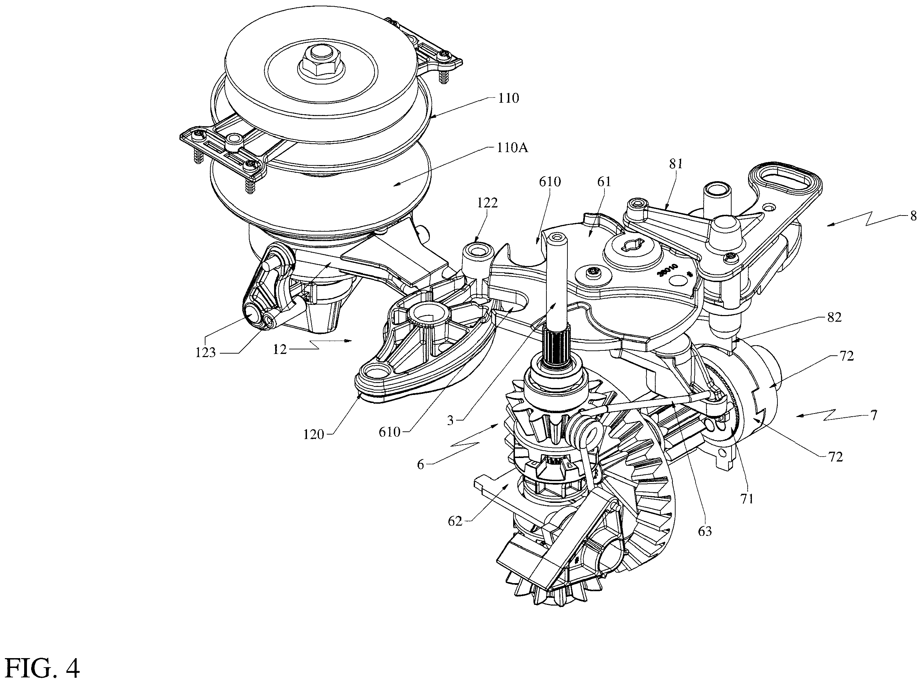

la figure 4 représente une vue partielle en perspective des commandes d'embrayage et d'inversion de sens associées à leurs mécanismes ;

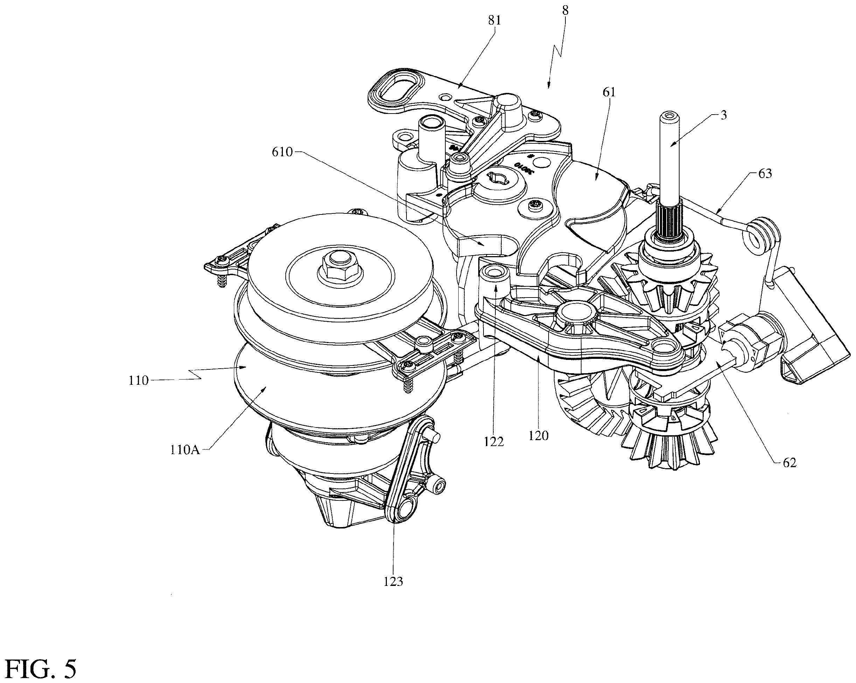

la figure 5 représente une vue partielle en perspective prise sous un autre angle des mécanismes d'embrayage et d'inversion de sens associés à leurs commandes ;

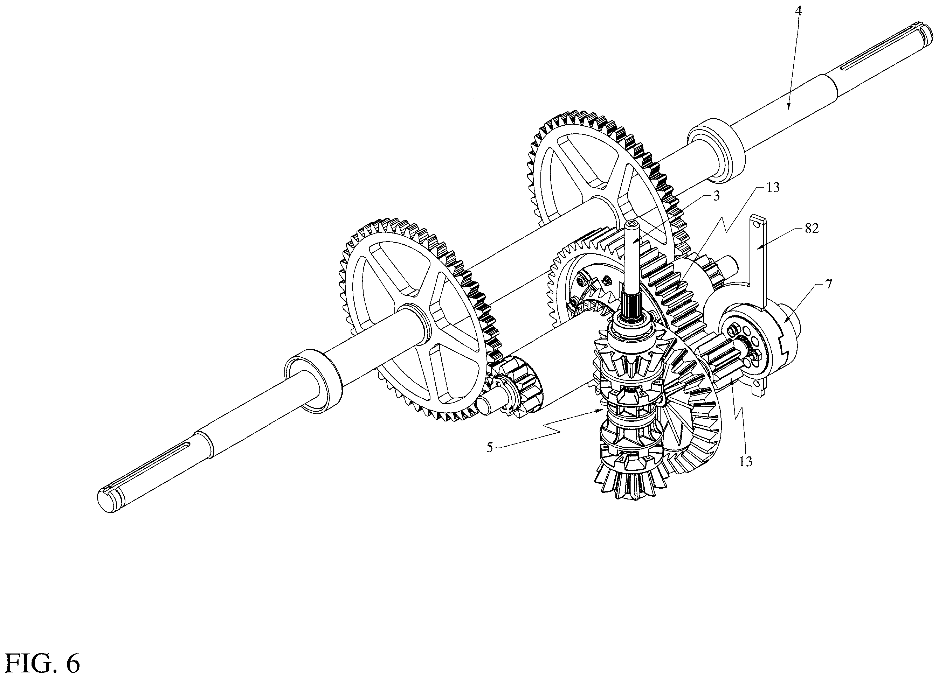

la figure 6 représente une vue partielle en perspective des moyens de transmission de mouvement entre l'arbre d'entrée et l'arbre de sortie ;

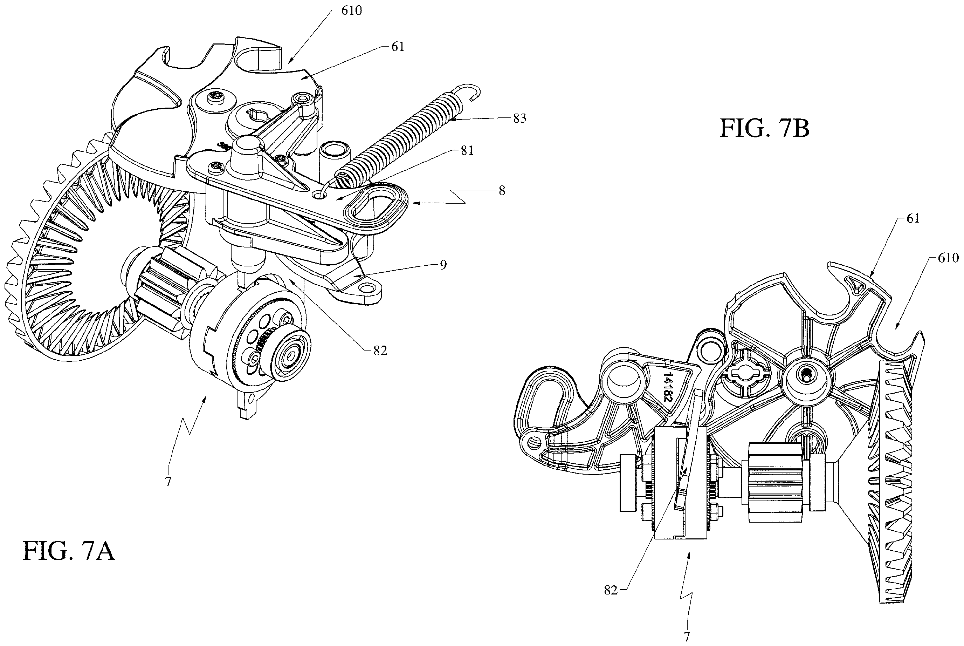

les figures 7A et 7B représentent respectivement en vue en perspective et en vue de dessous les commandes d'inversion de sens et de freinage associées au mécanisme de frein en deuxième position de freinage de la commande de frein ;

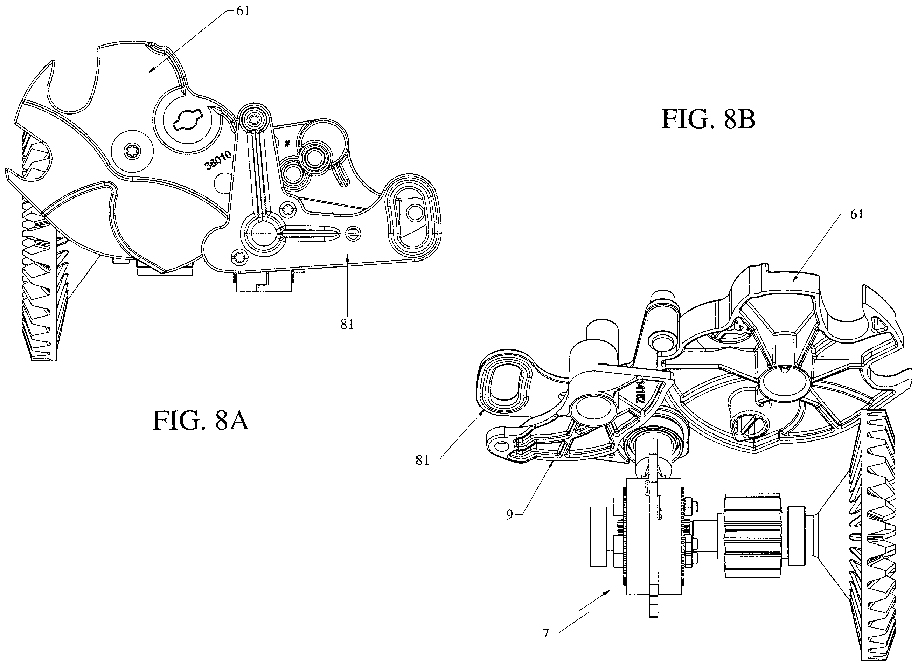

les figures 8A et 8B représentent respectivement en vue de dessus et en vue en perspective les commandes d'inversion de sens et de frein associées au mécanisme de frein en position marche avant de la commande d'inversion de sens et en position non freinée du dispositif de freinage ;

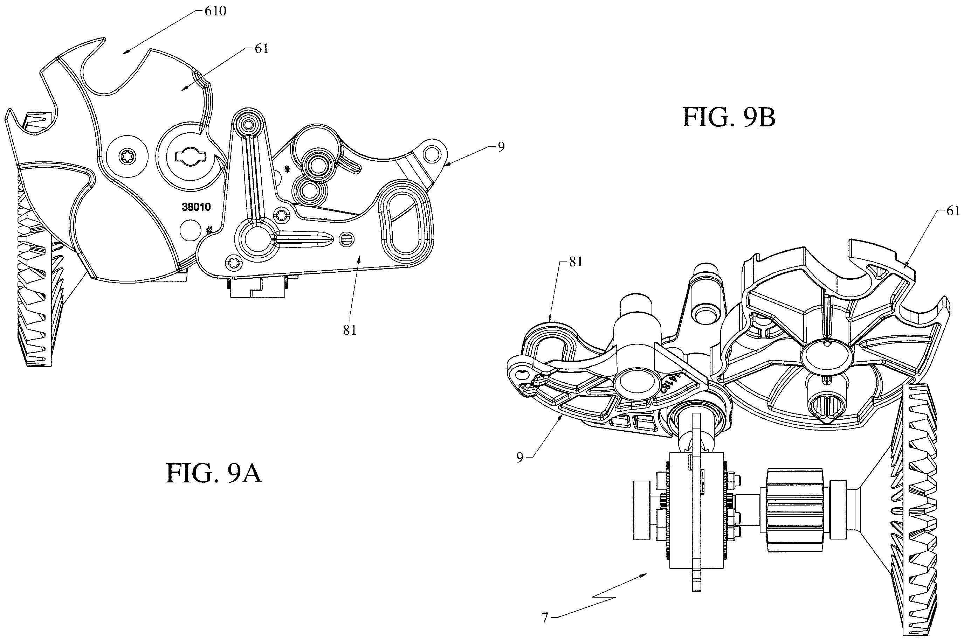

les figures 9A et 9B représentent respectivement en vue de dessus et en vue partielle en perspective les commandes de frein et d'inversion de sens avec la commande additionnelle en position active dans laquelle la commande de frein est en position non freinée ;
les figures 10A et 10B représentent respectivement en vue de face et en vue de dessus les mécanismes d'inversion de sens et d'embrayage associés à leurs commandes en position neutre de la commande d'inversion de sens et en position débrayée de la commande d'embrayage ;
les figures 11A et 11B représentent respectivement en vue de face et en vue de dessus les mécanismes d'inversion de sens et d'embrayage associés à leurs commandes en position marche avant de la commande d'inversion de sens et en position débrayée de la commande d'embrayage ;
les figures 12A et 12B représentent respectivement en vue de face et en vue de dessus les mécanismes d'inversion de sens et d'embrayage associés à leurs commandes en position marche avant de la commande d'inversion de sens et embrayée de la commande d'embrayage ;

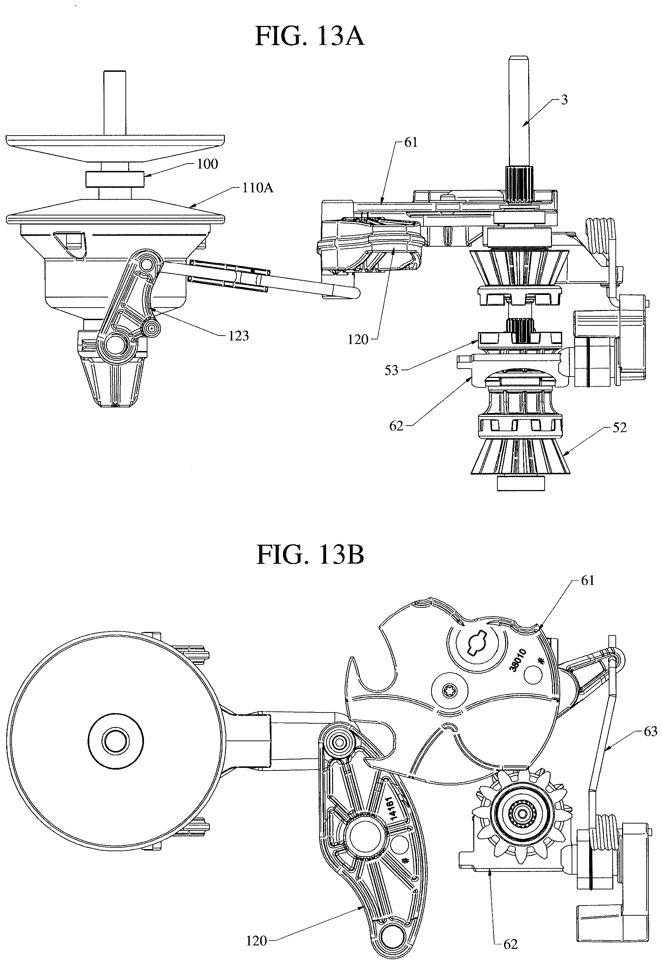

les figures 13A et 13B représentent respectivement en vue de face et en vue de dessus les mécanismes d'inversion de sens et d'embrayage associés à leurs commandes en position marche arrière de la commande d'inversion de sens et en position débrayée de la commande d'embrayage.

Comme mentionné ci-dessus, l'ensemble de transmission, objet de l'invention, est destiné à être installé sur un engin 20 automoteur, tel qu'un tracteur de tonte, équipé d'un arbre 21 primaire moteur et de roues 22.

Cet ensemble comprend un boîtier 1 de transmission formé, ici, de deux demi-coquilles assemblées par un plan de joint. Ce boîtier 1 de transmission comprend, faisant saillie au moins partiellement du boîtier 1, un arbre 3 d'entrée et un arbre 4 de sortie qui forme, dans les exemples représentés, l'arbre d'entraînement des roues de l'engin.

L'ensemble comporte encore un arbre 2 menant apte à être entraîné en rotation par l'arbre 21 primaire moteur de l'engin. Cet arbre 2 menant peut être commun avec l'arbre 21 primaire moteur de l'engin ou être couplé par une transmission sans fin à l'arbre 21 primaire moteur de l'engin. C'est cette deuxième solution qui est représentée.

L'arbre 2 menant est relié à l'arbre 3 d'entrée par une transmission 11 sans fin à courroie.

L'ensemble de transmission comprend encore un mécanisme 10 d'embrayage commandé. Ce mécanisme 10 d'embrayage est intégré à la transmission 11 à courroie.

Dans les exemples représentés, la transmission 11 à courroie est du type à variation de vitesse et comprend deux poulies 110, 111 à flasques à écartement variable. La poulie 110 est portée par l'arbre 2 menant tandis que la poulie 111 est portée par l'arbre 3 d'entrée.

La transmission à courroie comprend encore des moyens 112 de commande en rapprochement ou en écartement des flasques de la poulie, en l'occurrence ici la poulie menante.

Le mécanisme 10 d'embrayage comprend, quant à lui, un organe 100 fou apte à coopérer avec le flasque 110A mobile de la poulie 110 menante commandée. Cet organe 100 fou est ici formé par un roulement présentant une surface montée libre à rotation sur l'arbre 2 porteur de la poulie 110 commandée et autour de laquelle s'enroule au moins partiellement la courroie en position écartée des flasques de la poulie 110 menante commandée, de manière à empêcher toute transmission de mouvement entre arbres 2 et 3 porte-poulie.

Ce flasque 110A mobile de la poulie 110 menante commandée vient à recouvrement dudit organe 100 fou au cours du rapprochement des flasques de ladite poulie 110 menante commandée pour permettre l'enroulement de la courroie à l'intérieur de la gorge ménagée par les flasques et autoriser le passage du variateur de vitesse d'une position débrayée à une position embrayée.

La poursuite du rapprochement des flasques de la poulie 110 menante commandée permet de faire varier à volonté la vitesse.

Les moyens 112 de commande en rapprochement ou en écartement des flasques de la poulie 110 menante sont communs à la commande 12 d'embrayage.

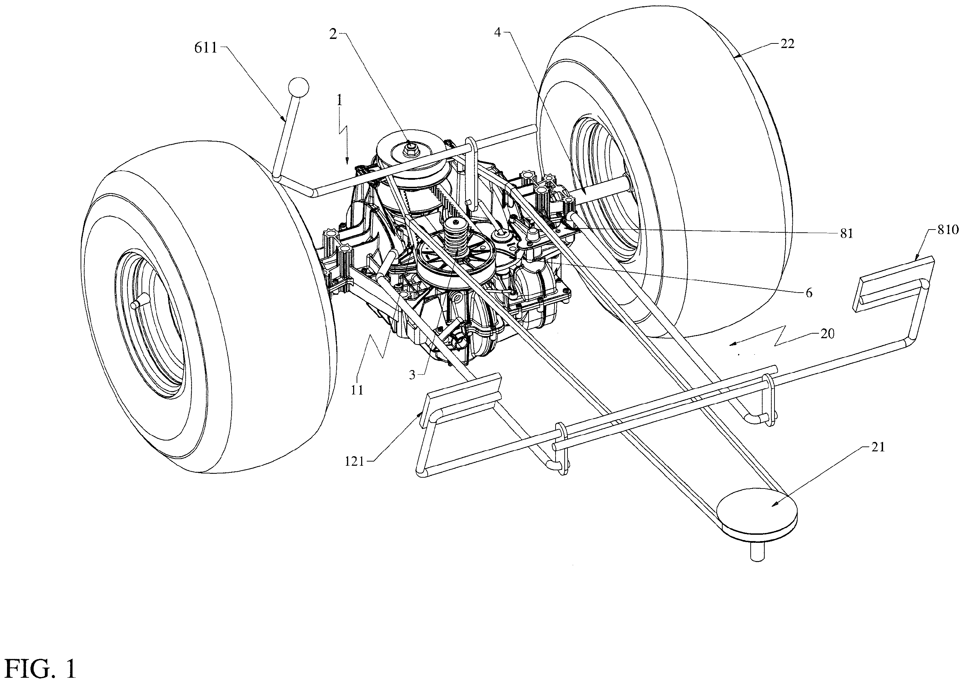

Cette commande 12 d'embrayage est portée par le boîtier et comprend une pièce 120 mobile, en l'occurrence un levier pivotant, couplable par un moyen de transmission de mouvement, par exemple une tige ressort, à un organe 121 de commande formé, dans l'exemple représenté, d'une pédale actionnable par l'opérateur. Cette pédale est visible à la figure 1.

L'actionnement de la pédale 121 permet le passage de la commande 12 d'embrayage, en particulier de la pièce 120 mobile de ladite commande, de la position débrayée à la position embrayée et inversement par déplacement angulaire. Cette pièce 120 mobile est couplée via une tige ressort à un levier qui agit sur le flasque 110A mobile de la poulie 110 menante commandée dans le sens d'un rapprochement du flasque de ladite poulie de l'autre flasque de la poulie pour permettre l'embrayage et la variation de vitesse comme décrit ci-dessus.

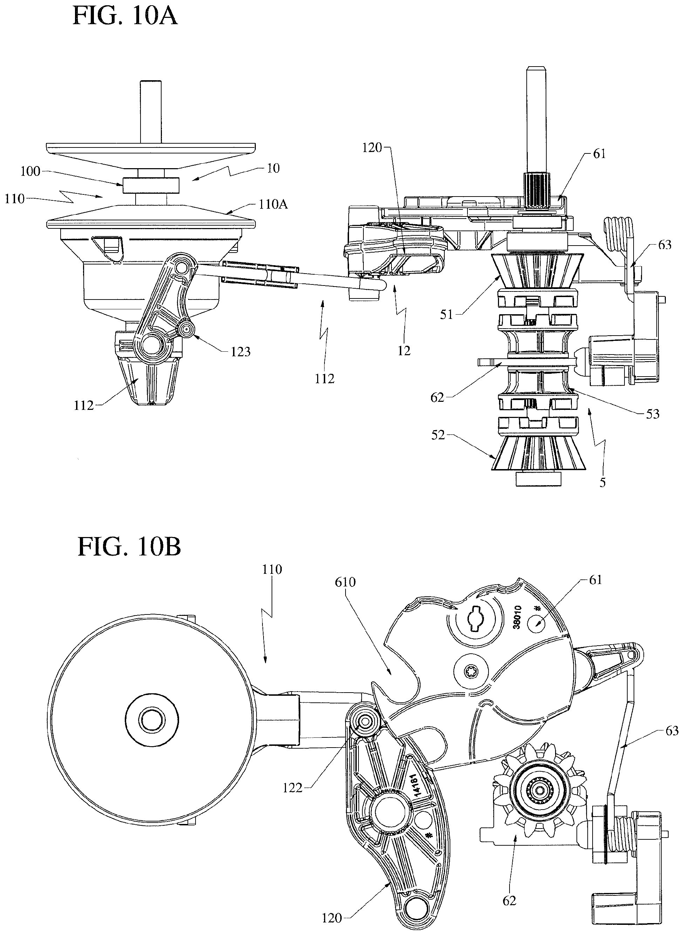

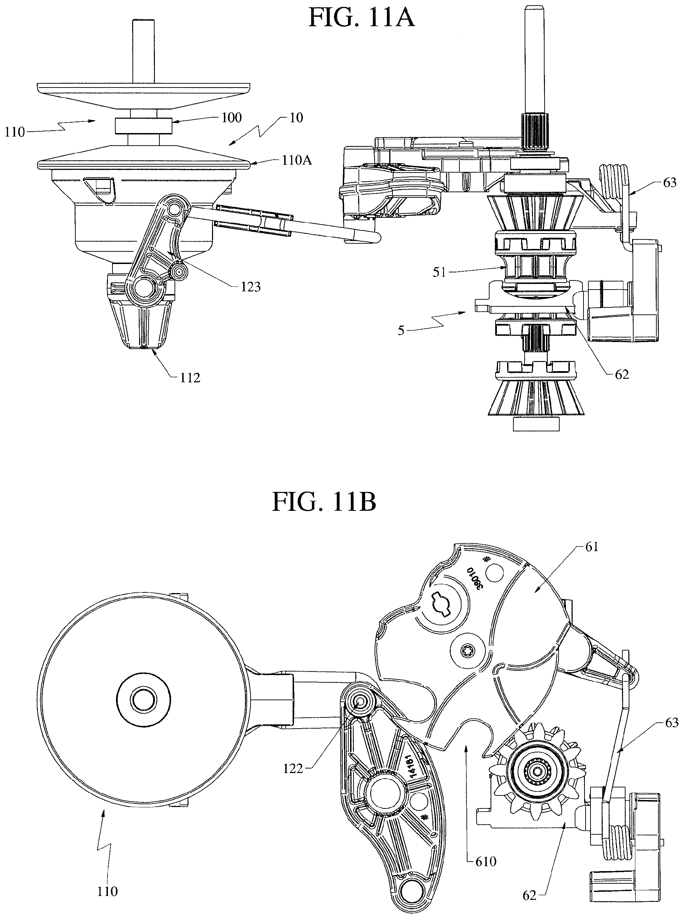

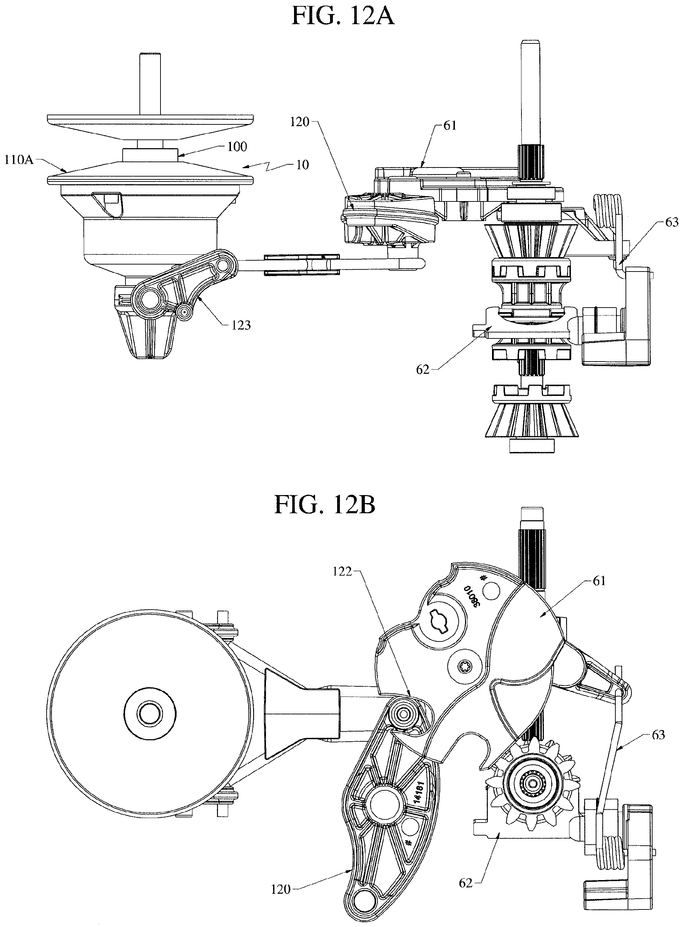

Cette tige ressort et ce levier sont plus particulièrement visibles par exemple aux figures 10A à 12A et sont représentés en 123 aux figures.

La pièce 120 mobile commandée de la commande 12 d'embrayage formée ici par un levier pivotant porte un organe 122 de verrouillage mâle se présentant dans les exemples sous forme d'un plot. Le rôle de cet organe 122 de verrouillage sera décrit ci-après.

L'ensemble de transmission comprend encore un mécanisme 5 inverseur de sens d'entraînement en rotation de l'arbre 4 de sortie commandé par l'intermédiaire d'une commande 6 d'inversion de sens.

L'ensemble de transmission comprend donc entre l'arbre primaire moteur de l'engin et l'arbre de sortie au moins un variateur de vitesse à courroie commandé intégrant le mécanisme d'embrayage commandé et un mécanisme inverseur de sens de déplacement de l'engin commandé, l'arbre primaire moteur transmettant, par l'intermédiaire du variateur de vitesse intégrant le mécanisme d'embrayage, son mouvement à l'arbre d'entrée du mécanisme inverseur lui-même apte à venir en prise directe ou indirecte avec l'arbre de sortie de manière à permettre un déplacement en marche avant ou respectivement en marche arrière de l'engin à une vitesse d'avancement variable.

Ce mécanisme 5 inverseur de sens d'entraînement en rotation de l'arbre 4 de sortie est un mécanisme à crabotage équipé d'une commande 6 d'inversion de sens.

Ce mécanisme 5 inverseur de sens porté par l'arbre 3 d'entrée comprend deux éléments 51, 52 de crabot dit, l'un, représenté en 51 aux figures, crabot marche avant, l'autre, représenté en 52 aux figures, crabot marche arrière, et un crabot 53 mobile interposé entre les éléments 51, 52 de crabot marche avant et marche arrière.

Ces éléments 51, 52 de crabot marche avant et marche arrière sont montés couplables/désacouplables en rotation de l'arbre 3 qui les porte par l'intermédiaire du crabot 53 monté mobile axialement sur ledit arbre 3 par l'intermédiaire de la commande 6 d'inversion de sens pour pouvoir occuper une position marche avant dans laquelle le crabot 53 mobile est en prise avec l'élément 51 de crabot marche avant, une position marche arrière dans laquelle le crabot 53 mobile est en prise avec l'élément 52 de crabot marche arrière et une position neutre dans laquelle le crabot 53 mobile n'est en prise avec aucun des éléments 51, 52 de crabot marche avant ou marche arrière.

Dans les exemples représentés, la commande 6 d'inversion de sens comprend une pièce 61 mobile commandée affectant la forme d'une came couplable par un moyen de transmission de mouvements, tel qu'une tige ressort, à un organe 611 de commande, en l'occurrence un levier à trois positions actionnable à la main par l'opérateur pour le déplacement de ladite commande 6 d'inversion de sens entre les positions neutre, marche avant et marche arrière. Ce levier à trois positions est plus particulièrement visible à la figure 1.

Cette pièce 61 mobile commandée est équipée de deux organes 610 de verrouillage femelle complémentaires de l'organe 122 de verrouillage mâle de la commande 12 d'embrayage. Ces organes 610 de verrouillage femelle affectent chacun la forme d'une encoche ménagée sur le pourtour de la came 61.

La commande 6 d'inversion de sens comprend encore au moins une fourchette 62 couplée par l'intermédiaire d'une liaison 63, de préférence non rigide, à la pièce 61 mobile commandée pour un déplacement angulaire de ladite fourchette 62 sous l'action du déplacement de la pièce 61 mobile commandée.

Le crabot 53 mobile se présente sous forme d'un manchon monté solidaire en rotation de l'arbre 3 qui le porte. Ce manchon est muni d'une gorge 530 annulaire périphérique externe et la fourchette 62 est munie d'une dent apte à s'insérer dans la gorge 530 du manchon constitutif du crabot 53 mobile.

Le manchon constitutif du crabot 53 mobile est muni à chacune de ses extrémités d'une crénelure circulaire qui vient en prise alternativement avec des dents de crabotage portées par les éléments 51, 52 de crabot marche avant et marche arrière qui affectent chacun la forme d'un pignon conique muni sur l'une de ses faces desdites dents de crabotage.

De manière caractéristique à l'invention, la commande 6 d'inversion de sens forme, en position neutre, un moyen de blocage de la commande 12 d'embrayage en position débrayée, et la commande 12 d'embrayage forme, en position embrayée, un moyen de verrouillage de la commande 6 d'inversion de sens en position marche avant ou marche arrière.

Ainsi, la came 61 de la commande 6 d'inversion de sens forme, en position neutre, une butée de limitation en déplacement angulaire du levier 120 pivotant de la commande 12 d'embrayage. La butée de limitation en déplacement angulaire du levier 120 est formée par l'espace laissé libre entre deux encoches 610 de la came 61. Le levier 120 pivotant de la came 12 d'embrayage forme, quant à lui, en position embrayée, un moyen de blocage en déplacement angulaire de la came 61.

En effet, en position embrayée, le plot 122 du levier 120 vient se loger dans une encoche 610 de la came et empêche le passage de la came de la position marche avant ou marche arrière à la position neutre.

L'opérateur, en l'occurrence le conducteur de l'engin, est donc contraint de choisir le sens de marche de l'engin avant d'embrayer, et de débrayer avant de revenir à la position neutre pour inverser le sens de l'engin.

Dans les exemples représentés, l'ensemble de transmission comprend en outre un mécanisme 7 de frein de l'arbre 3 d'entrée et/ou de l'arbre 4 de sortie et/ou des moyens de transmission. Ledit mécanisme 7 de frein est équipé d'une commande 8 de frein portée par ledit boîtier 1. La commande 8 de frein est montée mobile entre au moins une position dite première position de freinage et une position non freinée et est couplable à un organe 810 de commande de frein actionnable par l'opérateur, pour le passage de ladite commande 8 de frein de la position non freinée à ladite première position de freinage sous l'action dudit organe 810 de commande de frein actionnable par l'opérateur. Cette commande 8 de frein présente une deuxième position de freinage distincte de la première position de freinage et des moyens 83 de rappel de ladite commande 8 de frein en deuxième position de freinage. Ces moyens 83 de rappel sont aptes, en position neutre de la commande 6 d'inversion de sens à rappeler la commande 8 de frein en deuxième position de freinage. Le mécanisme 7 de frein comporte encore des moyens d'entraînement en déplacement de la commande 8 de frein de la deuxième position de freinage à la position non freinée, ces moyens d'entraînement en déplacement de la commande 8 de frein étant formés au moins partiellement par la commande 6 d'inversion de sens active à l'encontre des moyens 83 de rappel lors du passage de ladite commande 6 d'inversion de sens de la position neutre à la position marche avant ou marche arrière.

Le mécanisme 7 de frein monté, sur l'arbre d'entrée, ou l'arbre de sortie, ou un arbre des moyens de transmission entre arbre d'entrée et arbre de sortie, comme cela est le cas dans les exemples représentés, comprend au moins une paire de deux pièces à surface conique sensiblement coaxiales aptes à être enfilées sur ledit arbre et montées l'une, dite cône mâle, solidaire en rotation dudit arbre, l'autre, dite cône femelle, fixe en rotation par rapport audit arbre.

Le cône 72 femelle affecte la forme d'une roue à alésage axial à portée conique et le cône 71 mâle, de préférence de forme générale tronconique, est évidé centralement pour pouvoir être enfilé sur ledit corps.

La commande 8 de frein est apte à commander les cônes 71, 72 en déplacement relatif axial dans le sens d'un rapprochement ou d'un écartement. Le cône 71 mâle est, en position rapprochée desdits cônes, correspondant à la position de freinage, logé à l'intérieur de l'alésage axial du cône 72 femelle avec la surface périphérique externe conique en prise par contact d'appui avec la portée conique du cône 72 femelle.

Dans les exemples représentés, le mécanisme 7 de frein comporte deux paires de cônes formées chacune d'un cône mâle et d'un cône femelle, et la commande 8 de frein est commune aux deux paires de cônes.

Cette commande 8 de frein comprend une pièce 81 mobile commandée couplable par un moyen de transmission de mouvement à l'organe 810 de commande de frein actionnable par l'opérateur, formé ici par une pédale. Cette pièce 81 commandée affecte la forme d'un levier 81 pivotant équipé de moyen 83, tel qu'un ressort de rappel, dans une position d'appui contre le profil externe de la came 61 constitutif de la pièce mobile commandée de la commande 6 d'inversion de sens.

Le levier 81 pivotant et la came 61 sont montés à rotation autour d'axes parallèles.

La commande 8 de frein comprend encore une fourchette 82 à deux branches couplée, de manière solidaire en rotation, à la pièce 81 mobile commandée, chaque branche de la fourchette 82 étant munie d'une dent radiale interne formant la partie active de la fourchette positionnable au voisinage d'au moins l'un desdits cônes 71, 72 pour un déplacement desdits cônes 71, 72 en rapprochement.

Dans les exemples représentés, les cônes femelles sont interposés entre les cônes mâles et sont commandés en déplacement par la fourchette disposée entre lesdits cônes femelles. Les cônes mâles sont bridés en écartement et définissent entre eux un intervalle de longueur maximale fixe à l'intérieur duquel sont logés les cônes femelles, la fourchette formant un écarteur interposé entre les cônes femelles. Les cônes mâles sont reliés entre eux par l'intermédiaire de tiges parallèles le long desquelles les cônes mâles coulissent dans le sens d'un rapprochement ou d'un écartement l'un de l'autre, les tiges étant pourvues à chacune de leurs extrémités d'une butée axiale formant moyen de bridage en écartement des cônes.

Les cônes femelles sont commandés en déplacement axial et immobilisés en rotation par la fourchette commune. Les roues constitutives des cônes femelles portent, sur leur face en regard, des dents formant une crénelure circulaire. Les dents de la crénelure s'interpénètrent en ménageant entre elles un espace d'insertion d'une partie, dite partie active de commande, de la fourchette commune.

Chaque branche de la fourchette est munie d'une dent radiale interne formant la partie active de commande.

Le fonctionnement d'un tel mécanisme de frein est le suivant :
On suppose que la commande d'inversion de sens est en position neutre. Le levier 81 pivotant de commande de frein est rappelé par le ressort 83 contre le profil externe de la came 61 de commande d'inversion de sens qui occupe une position neutre dans une position correspondant à une position de freinage appelée deuxième position de freinage. Le mécanisme de frein forme dans cette deuxième position de freinage l'équivalent d'un frein de parking.

Lorsque la came d'inversion de sens est commandée suite à une commande en marche avant ou marche arrière de l'engin par le conducteur, le levier 81 pivotant de commande de frein est ramené, par contact d'appui de la came sur le levier 81, en position non freinée.

Si le conducteur de l'engin a besoin de freiner, il lui suffit d'actionner sa pédale de frein qui entraîne la commande de frein de la position non freinée à la première position de freinage.

Dès que le conducteur relâche sa pédale de frein, la commande de frein revient en position non freinée ou en deuxième position de freinage si la came d'inversion de sens est revenue en position neutre.

Le mécanisme 7 de frein comporte une commande 9 supplémentaire, dite additionnelle, actionnable par l'opérateur entre une position inactive et une position active, cette commande 9 additionnelle étant, au cours de son activation, apte, en deuxième position de freinage de la commande 8 de frein, à coopérer avec la commande 8 de frein, pour le passage de la commande 8 de frein de la deuxième position de freinage à la position non freinée.

En effet, si le poste de conduite de l'engin n'est plus accessible, il n'est plus possible de déplacer par poussée l'engin. Pour éviter un tel inconvénient, il est prévu une commande additionnelle. La commande 8 de frein est disposée au moins partiellement sur la trajectoire suivie par la commande 9 additionnelle au cours de son activation pour permettre parallèlement à l'activation de la commande 9 additionnelle, le passage de la commande 8 de frein de la deuxième position de freinage à la position non freinée par simple contact d'appui.

Dans les exemples représentés, la commande 9 additionnelle comprend une pièce, en l'occurrence un levier pivotant, monté mobile entre une position inactive et une position active et apte à être couplé à un organe de transmission de mouvement allongé, de type tringle, actionnable par l'opérateur positionné à l'extérieur de l'engin, généralement à l'arrière de l'engin, pour le passage de ladite pièce formée par le levier pivotant d'une position à une autre.

Au moins une partie de la commande 9 additionnelle formée par le levier pivotant, est équipée d'un plot qui vient en appui sur le levier pivotant de la commande 8 de frein au cours de l'activation de la commande 9 additionnelle pour contraindre le levier 81 pivotant de la commande 8 de frein à passer de la deuxième position de freinage à la position non freinée par simple contact d'appui.

Le fonctionnement de l'ensemble de transmission est tel que suit :
On suppose que la pédale d'embrayage et de variation de vitesse est en position non embrayée, que le levier d'inversion de sens est en position neutre et que la commande du mécanisme de frein est en deuxième position de freinage, la pédale de frein n'étant pas actionnée.

Le conducteur ne peut pas actionner son levier d'embrayage et de variation de vitesse en raison de la coopération entre commandes d'embrayage et d'inversion de sens. Il doit donc actionner le levier d'inversion de sens pour passer en marche avant ou en marche arrière. Ceci amène la commande de frein en position non freinée et permet à la commande d'embrayage d'être actionnée.

Le conducteur actionne donc sa pédale d'embrayage et de variation de vitesse. Ceci verrouille la commande d'inversion de sens dans la position marche avant ou marche arrière sélectionnée.

S'il souhaite reculer alors qu'il était en mode fonctionnement marche avant, le conducteur doit relâcher la pédale d'embrayage et de variation de vitesse, ce qui permet de déverrouiller la commande d'inversion de sens, actionner le levier d'inversion de sens pour le ramener en position neutre, puis l'engager en position marche arrière. Il peut de nouveau embrayer et faire varier la vitesse.

Si, à un moment quelconque au cours de l'avance ou du recul de l'engin, il souhaite freiner, il lui suffit d'actionner la pédale de frein pour l'amener de la commande de frein en première position de freinage.

## Revendications

1. Ensemble de transmission pour engin (20) automoteur, du type positionnable entre l'arbre (21) primaire moteur et les roues (22) dudit engin, et comprenant un boîtier (1) de transmission équipé d'un arbre (3) d'entrée et d'un arbre (4) de sortie, tel que l'arbre d'entraînement des roues de l'engin, un arbre (2), dit menant, apte à être entraîné en rotation par l'arbre (21) primaire moteur et relié audit arbre (3) d'entrée formant l'arbre mené par une transmission (11) sans fin à courroie, un mécanisme (10) d'embrayage, et disposés entre l'arbre (3) d'entrée et l'arbre (4) de sortie, pour la transmission du mouvement de l'arbre (3) d'entrée à l'arbre (4) de sortie, des moyens (13) de transmission comprenant un mécanisme (5) inverseur de sens d'entraînement en rotation de l'arbre (4) de sortie, les mécanismes (5) inverseur de sens et (10) d'embrayage comportant chacun une commande (6, 12), lesdites commandes (6, 12) d'inversion de sens et d'embrayage portées par ledit boîtier (1), étant montées respectivement mobiles l'une (6), entre au moins trois positions à savoir une position neutre, une position marche avant et une position marche arrière, l'autre (12), entre au moins une position embrayée et une position débrayée,
**caractérisé en ce que** la commande (6) d'inversion de sens forme, en position neutre de ladite commande (6) d'inversion de sens, un moyen de blocage de la commande (12) d'embrayage en position débrayée apte à empêcher le passage de la commande (12) d'embrayage de la position débrayée à la position embrayée, et **en ce que** la commande (12) d'embrayage forme, en position embrayée de la commande (12) d'embrayage, un moyen de verrouillage de la commande (6) d'inversion de sens en position marche avant ou marche arrière, apte à empêcher le passage de la commande (6) d'inversion de sens de la position marche avant ou marche arrière à la position neutre.

2. Ensemble de transmission selon la revendication 1,
**caractérisé en ce que** la commande (12) d'embrayage et la commande (6) d'inversion de sens comprennent chacune au moins une pièce (120, 61) mobile.

3. Ensemble de transmission selon la revendication 2,
**caractérisé en ce que** la ou au moins une pièce (61) mobile de la commande (6) d'inversion de sens est une pièce rotative, telle qu'une came, et **en ce que** la commande (12) d'embrayage forme, en position embrayée, un moyen de blocage en déplacement angulaire de ladite pièce (61).

4. Ensemble de transmission selon l'une des revendications 2 ou 3,
**caractérisé en ce que** la ou au moins une pièce (120) mobile de la commande (12) d'embrayage est un levier pivotant, et **en ce que** la commande (6) d'inversion de sens forme, en position neutre, une butée de limitation en déplacement angulaire dudit levier.

5. Ensemble de transmission selon les revendications 2 à 4,
**caractérisé en ce que** la ou une pièce (61) mobile de la commande (6) d'inversion de sens est une pièce commandée couplable par un moyen de transmission de mouvement à un organe (611) de commande actionnable par l'opérateur pour le déplacement de ladite commande entre les positions neutre, marche avant et marche arrière, et **en ce que** la ou une pièce (120) mobile de la commande (12) d'embrayage est une pièce commandée couplable, par un moyen de transmission de mouvement, à un organe (121) de commande actionnable par l'opérateur pour le passage de ladite commande (12) d'embrayage de la position débrayée à la position embrayée et inversement.

6. Ensemble de transmission selon les revendications 2 à 5,
**caractérisé en ce que** les pièces (120, 61) mobiles de la commande (12) d'embrayage et de la commande (6) d'inversion de sens sont munies respectivement l'une (12), d'un organe (122) de verrouillage, l'autre (6), de deux organes (610) de verrouillage complémentaires aptes à coopérer alternativement avec l'organe (122) de verrouillage de la commande (12) d'embrayage, en fonction de la position marche avant ou marche arrière de la commande (6) d'inversion de sens.

7. Ensemble de transmission selon la revendication 6,
**caractérisé en ce que** l'organe (122) de verrouillage de la commande (12) d'embrayage est un organe mâle et les organes (610) de verrouillage complémentaires de la commande (6) d'inversion de sens sont des organes femelles.

8. Ensemble de transmission selon l'une des revendications 6 ou 7,
**caractérisé en ce que** la ou au moins une pièce (120) mobile de la commande (12) d'embrayage étant un levier (120) pivotant couplable par un moyen de transmission de mouvement à un organe (121) de commande actionnable par l'opérateur pour le passage dudit levier (120) de la position débrayée à la position embrayée et inversement, l'organe (122) mâle de verrouillage affecte la forme d'un plot porté par ledit levier (120), et **en ce que** la ou au moins une pièce mobile (61) de la commande (6) d'inversion de sens étant une pièce du genre came couplable par un moyen de transmission de mouvement à un organe (611) de commande actionnable par l'opérateur pour le déplacement de ladite commande entre les positions neutre, marche avant et marche arrière, les organes (610) femelles de verrouillage complémentaires de la commande (6) d'inversion affectent chacun la forme d'une encoche (610) ménagée sur le pourtour de la came (61), l'espace laissé libre entre deux encoches (610) formant, en position neutre de la commande (6) d'inversion de sens la butée de limitation en déplacement angulaire dudit levier (120).

9. Ensemble de transmission selon l'une des revendications précédentes,
**caractérisé en ce que** le mécanisme (10) d'embrayage est intégré à la transmission (11) à courroie.

10. Ensemble de transmission selon la revendication 9,
**caractérisé en ce que** la transmission (11) à courroie est du type à variation de vitesse et comprend deux poulies (110, 111) à flasques à écartement variable portées l'une (110), par l'arbre (2) menant, l'autre (111), par l'arbre (3) d'entrée, et des moyens (112) de commande en rapprochement ou en écartement des flasques de l'une des poulies, **en ce que** le mécanisme (10) d'embrayage comprend un organe (100) fou apte à coopérer avec le flasque (110A) mobile de la poulie (110) menante commandée, cet organe (100) fou, tel qu'un roulement, un galet, ou une bague, présentant une surface montée libre à rotation sur l'arbre (2) porteur de la poulie (110) commandée et autour de laquelle s'enroule au moins partiellement la courroie en position écartée des flasques de la poulie (110) menante commandée de manière à empêcher toute transmission de mouvement entre arbres (2, 3) porte-poulie, le flasque (110A) mobile de la poulie (110) menante commandée venant à recouvrement dudit organe (100) fou au cours du rapprochement des flasques de ladite poulie (110) pour permettre l'enroulement de la courroie à l'intérieur de la gorge ménagée par les flasques et autoriser le passage du variateur de vitesse d'une position débrayée à une position embrayée, la poursuite du rapprochement des flasques de la poulie (110) menante commandée permettant de faire varier à volonté la vitesse, et **en ce que** les moyens (112) de commande en rapprochement ou en écartement des flasques de la poulie (110) menante sont au moins partiellement communs à la commande (12) d'embrayage.

11. Ensemble de transmission selon l'une des revendications précédentes,
**caractérisé en ce que** l'ensemble de transmission comprend en outre un mécanisme (7) de frein de l'arbre (3) d'entrée et/ou de l'arbre (4) de sortie et/ou des moyens de transmission, ledit mécanisme (7) de frein étant équipé d'une commande (8) de frein portée par ledit boîtier (1), la commande (8) de frein, montée mobile entre au moins une position dite première position de freinage et une position non freinée, étant couplable à un organe (810) de commande de frein actionnable par l'opérateur, pour le passage de ladite commande (8) de frein de la position non freinée à ladite première position de freinage sous l'action dudit organe (810) de commande de frein actionnable par l'opérateur, cette commande (8) de frein présentant une deuxième position de freinage distincte de la première position de freinage, des moyens (83) de rappel de ladite commande (8) de frein en deuxième position de freinage, ces moyens (83) de rappel étant aptes, en position neutre de la commande (6) d'inversion de sens à rappeler la commande (8) de frein en deuxième position de freinage et des moyens d'entraînement en déplacement de la commande (8) de frein de la deuxième position de freinage à la position non freinée, ces moyens d'entraînement en déplacement de la commande (8) de frein étant formés au moins partiellement par la commande (6) d'inversion de sens active sur ladite commande (8) de frein à l'encontre des moyens (83) de rappel, lors du passage de ladite commande (6) d'inversion de sens de la position neutre à la position marche avant ou marche arrière.

12. Ensemble de transmission selon la revendication 11,
**caractérisé en ce que** le mécanisme (7) de frein comporte une commande (9) supplémentaire, dite additionnelle, actionnable par l'opérateur entre une position inactive et une position active, cette commande (9) additionnelle étant, au cours de son activation, apte, en deuxième position de freinage de la commande (8) de frein, à coopérer avec la commande (8) de frein, pour le passage de la commande (8) de frein de la deuxième position de freinage à la position non freinée.

13. Engin (20) automoteur du type comprenant un arbre (21) primaire moteur, des roues et un ensemble de transmission disposé entre l'arbre (21) primaire moteur et les roues (22),
**caractérisé en ce que** l'ensemble de transmission est conforme à l'une des revendications 1 à 12.

## Patentansprüche

1. Getriebeanordnung für eine selbstfahrende Maschine (20) vom Typ, der zwischen der primären Motorwelle (21) und den Rädern (22) der Maschine positioniert werden kann, und umfassend ein Getriebegehäuse (1), das mit einer Eingangswelle (3) und einer Ausgangswelle (4) ausgestattet ist, wie z. B. der Triebwelle der Räder der Maschine, eine Welle (2), bezeichnet als Antriebswelle, die ausgelegt ist um durch die primäre Motorwelle (21) in Drehung versetzt und mit der Eingangswelle (3) verbunden zu werden, die eine Abtriebswelle durch einen Endlosübertragung (11) mit Riemen bildet, einen Kupplungsmechanismus (10), und angeordnet zwischen der Eingangswelle (3) und der Ausgangswelle (4) für die Übertragung der Bewegung der Eingangswelle (3) an die Ausgangswelle (4), wobei die Mittel (13) zur Übertragung einen Mechanismus (5) zur Umkehr der Richtung des Versetzens der Ausgangswelle (4) in Drehung umfassen, wobei die Mechanismen (5) zur Umkehr der Richtung und (10) der Kupplung jeweils eine Steuerung (6, 12) umfassen, wobei die Steuerungen (6, 12) zur Umkehr der Richtung und der Kupplung, getragen vom Gehäuse (1), jeweils beweglich montiert sind, die eine (6) zwischen mindestens drei Positionen, d. h. einer neutralen Position, einer Vorwärtsposition und einer Rückwärtsposition, die andere (12) zwischen mindestens einer gekuppelten Position und einer entkuppelten Position,
**dadurch gekennzeichnet, dass** die Steuerung (6) zur Umkehr der Richtung in der neutralen Position der Steuerung (6) zur Umkehr der Richtung ein Mittel zur Blockierung der Steuerung (12) der Kupplung in der entkuppelten Position bildet, das ausgelegt ist, um den Übergang der Steuerung (12) der Kupplung von der entkuppelten Position in die gekuppelte Position zu verhindern, und dadurch, dass die Steuerung (12) zur Kupplung in der gekuppelten Position der Steuerung (12) ein Mittel zur Verriegelung der Steuerung (6) zur Umkehr der Richtung in der Vorwärts- oder Rückwärtsposition bildet, die ausgelegt ist, um den Übergang der Steuerung (6) der Umkehr zur Richtung von der Vorwärtsposition oder Rückwärtsposition in die neutrale Position zu verhindern.

2. Getriebeanordnung nach Anspruch 1, **dadurch gekennzeichnet, dass** die Steuerung (12) der Kupplung und die Steuerung (6) zur Umkehr der Richtung jeweils mindestens ein bewegliches Teil (120, 61) umfassen.

3. Getriebeanordnung nach Anspruch 2, **dadurch gekennzeichnet, dass** der oder mindestens eine bewegliche(r) Teil (61) der Steuerung (6) zur Umkehr der Richtung ein drehender Teil ist, wie z. B. ein Nocken, und dadurch, dass die Steuerung (12) der Kupplung in der gekuppelten Position ein Blockiermittel zur Winkelverschiebung des Teils (61) bildet.

4. Getriebeanordnung nach einem der Ansprüche 2 oder 3, **dadurch gekennzeichnet, dass** der oder mindestens ein(e) bewegliche Teil (120) der Steuerung der Kupplung (12) ein Schwenkhebel ist, und dadurch, dass die Steuerung (6) zur Umkehr der Richtung in der neutralen Position einen Anschlag zur Begrenzung der Winkelverschiebung des Hebels bildet.

5. Getriebeanordnung nach Anspruch 2 bis 4, **dadurch gekennzeichnet, dass** der oder ein bewegliche(r) Teil (61) der Steuerung (6) zur Umkehr der Richtung ein gesteuerter Teil ist, der durch ein Mittel zur Übertragung der Bewegung an ein Organ (611) zur Steuerung gekoppelt werden kann, das vom Bediener für die Verschiebung der Steuerung zwischen der neutralen, Vorwärts- und Rückwärtsposition betätigt werden kann, und dadurch, dass der oder ein bewegliche(r) Teil (120) der Steuerung (12) zur Kupplung ein gesteuerter Teil ist, der durch ein Mittel zur Übertragung der Bewegung an ein Organ (121) zur Steuerung gekoppelt werden kann, das vom Bediener für den Übergang der Steuerung (12) zur Kupplung von der entgekuppelten Position in die gekuppelte Position betätigt werden kann.

6. Getriebeanordnung nach Anspruch 2 bis 5, **dadurch gekennzeichnet, dass** die beweglichen Teile (120, 61) der Steuerung (12) der Kupplung und der Steuerung (6) zur Umkehr der Richtung jeweils das eine (12) mit einem Organ (122) zur Verriegelung, das andere (6) mit zwei zusätzlichen Organen (610) zur Verriegelung ausgestattet sind, die ausgelegt sind, um alternativ mit dem Organ (122) zur Verriegelung der Steuerung (12) der Kupplung je nach der Vorwärts- oder Rückwärtsposition der Steuerung (6) zur Umkehr der Richtung zusammenzuarbeiten.

7. Getriebeanordnung nach Anspruch 6, **dadurch gekennzeichnet, dass** das Organ (122) zur Verriegelung der Steuerung (12) der Kupplung ein Außenorgan ist und die zusätzlichen Organe (610) zur Verriegelung der Steuerung (6) zur Umkehrung der Richtung Innenorgane sind.

8. Getriebeanordnung nach einem der Ansprüche 6 oder 7, **dadurch gekennzeichnet, dass** der oder mindestens ein bewegliche(r) Teil (120) der Steuerung (12) der Kupplung ein Schwenkhebel (120) ist, der durch ein Mittel zur Übertragung der Bewegung an ein Organ (121) zur Steuerung gekoppelt werden kann, das vom Bediener für den Übergang des Hebels (120) von der entkuppelten Position in die gekuppelte Position und umgekehrt betätigt werden kann, das Außenorgan (122) zu Verriegelung die Form eines Kontakts annimmt, der von dem Hebel (120) getragen wird, und dadurch, dass, der oder mindestens ein bewegliche(r) Teil (61) der Steuerung (6) zur Umkehr der Richtung ein Teil vom Typ Nocken ist, der durch ein Mittel zur Übertragung der Bewegung an ein Organ (611) zur Steuerung gekoppelt werden kann, das vom Bediener für die Verschiebung der Steuerung zwischen der neutralen, Vorwärts- und Rückwärtsposition betätigt werden kann, die zusätzlichen Innenorgane (610) zur Verriegelung der Steuerung (6) zur Umkehr jeweils die Form einer Nut (610) annehmen, die auf dem Umfang des Nockens (61) angebracht ist, wobei der Raum, der zwischen zwei Nuten (610) freigelassen ist, in der neutralen Position der Steuerung (6) zur Umkehr der Richtung, den Anschlag zur Begrenzung der Winkelverschiebung des Hebels (120) bildet.

9. Getriebeanordnung nach einem der vorhergehenden Ansprüche, **dadurch gekennzeichnet, dass** der Mechanismus (10) zur Kupplung in das Getriebe (11) mit Riemen integriert ist.

10. Getriebeanordnung nach Anspruch 9, **dadurch gekennzeichnet, dass** das Getriebe (11) mit Riemen vom Typ mit Geschwindigkeitsvariation ist und zwei Riemenscheiben (110, 111) mit Spulenflanschen mit variabler Beabstandung umfasst, von denen eine (110) von der Antriebswelle (2), der andere (111) von der Eingangswelle (3) getragen wird, und Mittel (112) zur Steuerung durch Annäherung oder durch Beabstandung der Spulenflansche einer der Riemenscheiben umfasst, dadurch, dass der Mechanismus (10) zur Kupplung ein loses Organ (100) umfasst, das ausgelegt ist, um mit dem beweglichen Spulenflansch (110A) der gesteuerten Antriebsriemenscheibe zusammenzuarbeiten, wobei dieses lose Organ (100), wie z. B. eine Rolle, eine Walze oder ein Ring, eine Oberfläche aufweist, die frei in Drehung auf der Tragewelle (2) der gesteuerten Riemenscheibe (110) montiert ist, und um die mindestens teilweise der Riemen in beabstandeter Position der Spulenflansche der gesteuerten Antriebsriemenscheibe (110) gewickelt ist, um jede Übertragung von Bewegung zwischen Riemenscheibenträger-Wellen (2, 3) zu verhindern, wobei der bewegliche Spulenflansch (110A) der gesteuerten Antriebsriemenscheibe das lose Organ (100) im Laufe der Annäherung der Riemenscheiben des Spulenflansches (110) abdeckt, um das Aufrollen des Riemens im Inneren der Auskehlung, die von den Spulenflanschen angebracht ist, zu ermöglichen und den Übergang des Geschwindigkeitsreglers von einer entgekuppelten Position in eine gekuppelte Position zu ermöglichen, wobei die Verfolgung der Annäherung der Spulenflansche der gesteuerten Antriebsriemenscheibe (110) ermöglicht, die Geschwindigkeit nach Belieben zu variieren, und dadurch, dass die Mittel (112) zur Steuerung durch Annäherung oder durch Beabstandung der Spulenflansche der Antriebsriemenscheibe (110) mindestens teilweise der Steuerung der Kupplung (12) gemeinsam sind.

11. Getriebeanordnung nach einem der vorhergehenden Ansprüche, **dadurch gekennzeichnet, dass** die Getriebeanordnung außerdem einen Bremsmechanismus (7) der Eingangswelle (3) und/oder der Ausgangswelle (4) und/oder der Übertragungsmittel umfasst, wobei der Bremsmechanismus (7) mit einer Bremssteuerung (8), getragen von dem Gehäuse (1), ausgestattet ist, wobei die Bremssteuerung (8), die beweglich zwischen mindestens einer Position, bezeichnet als erste Position, und einer nicht gebremsten Position montiert ist, an ein Bremssteuerorgan (810) gekoppelt werden kann, das vom Bediener betätigt werden kann, zum Übergang der Bremssteuerung (8) von der nicht gebremsten Position in die erste Bremsposition unter der Einwirkung des Bremssteuerorgans (810), das vom Bediener betätigt werden kann, wobei diese Bremssteuerung (8) eine zweite Bremsposition, verschieden von der ersten Bremsposition, darstellt, Mittel (83) zur Rückstellung der Bremssteuerung (8) in die zweite Bremsposition, wobei diese Mittel zur Rückstellung (83) ausgelegt sind, in der neutralen Position der Steuerung (6) zur Umkehr der Richtung, die Bremssteuerung (8) in die zweite Bremsposition zurückzustellen, und Mittel zur Verschiebung der Bremssteuerung (8) von der zweiten Bremsposition in die nicht gebremste Position, wobei diese Mittel zur Verschiebung der Bremssteuerung (8) mindestens teilweise durch die Steuerung der Umkehr (6) der aktiven Richtung auf der Bremssteuerung (8) gegen die Rückstellmittel (83) beim Übergang der Steuerung (6) zur Umkehr der Richtung von der neutralen Position in die Vorwärts- oder Rückwärtsposition gebildet werden.

12. Getriebeanordnung nach Anspruch 11, **dadurch gekennzeichnet, dass** der Bremsmechanismus (7) eine zusätzliche, als ergänzende bezeichnete Steuerung (9) umfasst, die durch den Bediener zwischen einer inaktiven und einer aktiven Position betätigt werden kann, wobei diese ergänzende Steuerung (9) im Laufe ihrer Betätigung ausgelegt ist, in der zweiten Bremsposition der Bremssteuerung (8) mit der Bremssteuerung (8) für den Übergang der Bremsssteuerung (8) von der zweiten Bremsposition in die nicht gebremste Position zusammenzuarbeiten.

13. Selbstfahrende Maschine (20) vom Typ umfassend eine primäre Motorachse (21), Räder und eine Getriebeanordnung, die zwischen der primären Motorwelle (21) und den Rädern (22) angeordnet ist,
**dadurch gekennzeichnet, dass** die Getriebeeinheit einem der Ansprüche 1 bis 12 entspricht.

## Claims

1. Transmission assembly for self-propelled machine (20), wherein the assembly is of the type that may be positioned between the primary motor shaft (21) and the wheels (22) of the machine, and wherein it comprises a transmission casing (1) equipped with an input shaft (3) and an output shaft (4), such as the drive shaft of the wheels of the machine, a drive shaft (2) that is designed to be rotated by the primary motor shaft (21) is connected to the input shaft (3) forming the shaft driven by an endless belt transmission (11), a clutch mechanism (10), wherein transmission means (13), comprising a mechanism (5) to reverse the direction of rotation of the output shaft (4) are arranged between the input shaft (3) and the output shaft (4) in order to transmit the movement of the input shaft (3) to the output shaft (4), wherein the direction-reversal mechanism (5) and the clutch-actuating mechanism (10) each have a control (6, 12), wherein the controls (6, 12) for reversal of the direction and the clutch carried by the casing (1) are mounted to be movable, one (6) of them between at least three positions, namely a neutral position, a forward position and a reverse position, while the other control (12) is movable between at least one engaged position and a disengaged position,
**characterized in that** the direction-reversal control (6) forms, in the neutral position of the reversal control (6), a means for locking the clutch control (12) in the disengaged position that is intended to prevent the passage of the clutch control (12) from the disengaged position to the engaged position, and wherein the clutch control (12) forms, in the engaged position of the clutch control (12), a means for locking the reversal control (6) in the forward or reverse position that is intended to prevent the passage of the reversal control (6) from the forward or reverse position to the neutral position.

2. Transmission assembly according to claim 1, **characterized in that** the clutch control (12) and the direction-reversal control (6) each comprise at least one movable part (120, 61).

3. Transmission assembly according to claim 2, **characterized in that** the at least one movable part (61) of the reversal control (6) is a rotating part, such as a cam, and **in that** the clutch control (12) forms a locking means in angular displacement of the part (61) when in the engaged position.

4. Transmission assembly according to one of the claims 2 or 3,
**characterized in that** the, or at least one, movable part (120) of the clutch control (12) is a pivoting lever, and **in that** the reversal control (6) form forms a limit stop in angular displacement of the lever when in the neutral position.

5. Transmission assembly according to claims 2 to 4,
**characterized in that** the, or at least one, movable part (61) of the direction-reversal control (6) is a controlled part that may be coupled by movement-transmission means to a control member (611) that may be operated by the operator in order to move the control between the neutral, forward and reverse positions, and that the, or at least one, movable part (120) of the clutch control (12) is a controlled part that may be coupled by a movement transmission means to a control member (121) that may be operated by the operator in order to move the clutch control (12) from the disengaged position to the engaged position and vice versa.

6. Transmission assembly according to claims 2 to 5,
**characterized in that** the movable parts (120, 61) of the clutch control (12) and the reversal control (6) are respectively provided one (12) of them with a locking member (122) and the other (6) with two complementary locking members (610) that are designed to interact alternately with the locking member (122) of the clutch control (12) as a function of the forward or reverse position of the direction-reversal control (6).

7. Transmission assembly according to claim 6,
**characterized in that** the member (122) for locking the clutch control (12) is a male member while the complementary locking members (610) of the reversal control (6) are female members.

8. Transmission assembly according to one of the claims 6 or 7,
**characterized in that** the, or at least one, movable part (120) of the clutch control (12) is a lever (120) that may be pivoted by a movement-transmission means to couple with an operator-actuated control member (121) to move the lever (120) from the disengaged position to the engaged position and vice versa, wherein the male locking member (122) is in the form of a stud carried by the lever (120), and **in that** the, or at least one, movable part (61) of the direction-reversal control (6) is a cam-type part that may be coupled by a movement-transmission means with a control member (611) that may be actuated by the operator to move the control between the neutral, forward and reverse positions, while the complementary female locking members (610) of the reversal control (6) each have the shape of a notch (610) formed on the periphery of the cam (61), wherein the space left free between two notches (610) forms the angular displacement limit stop of the lever (120), when in the neutral position of the reversal control (6).

9. Transmission assembly according to one of the preceding claims,
**characterized in that** the clutch mechanism (10) is integrated with the belt transmission (11).

10. Transmission assembly according to claim 9,
**characterized in that** the belt transmission (11) is of the speed variation type and comprises two pulleys (110, 111) with variable-clearance flanges wherein one (110) of them is carried by the drive shaft (2) while the other (111) is carried by the input shaft (3), and control means (112) control the movement of the flanges towards or away from one of the pulleys, wherein the clutch mechanism (10) comprises a member (100) that is able to interact with the movable flange (110A) of the controlled drive pulley (110), wherein this member (100), such as a bearing, roller, or a ring, has a mounted surface that is free to rotate on the shaft (2) carrying the controlled pulley (110) and around which the belt is at least partially wrapped in the spaced-apart position of the flanges of the controlled drive pulley (110), in order to prevent any transmission of movement between the pulley-carrying shafts (2, 3), wherein the movable flange (110A) of the controlled drive pulley (110) covers the member (100) during the approach of the flanges of the pulley (110) to allow winding of the belt inside the groove formed by the flanges and to allow the movement of the speed variator from a disengaged position to an engaged position, while the continued approach of the flanges of the controlled drive pulley (110) make it possible to vary the speed at desired, and that, upon movement of the flanges of the drive pulley (110) towards or away from each other, the control means (112) are at least partially in common with the clutch control (12).

11. Transmission assembly according to one of the preceding claims,
**characterized in that** the transmission assembly further comprises a mechanism (7) to brake the input shaft (3) and/or the shaft (4) and/or transmission means, wherein the brake mechanism (7) is equipped with a brake control (8) carried by the casing (1), and wherein the brake control (8), which is mounted to be movable between at least one position called the first braked position and an unbraked position, may be coupled to a member (810) for operator-actuated brake control, for movement of the brake control (8) from the unbraked position to the first braking position under the action of the operator-actuated brake control member (810), wherein this brake control (8) has a second braking position that is distinct from the first braking position, and means (83) to return the brake control (8) to second braking position, wherein these return means (83) are able in the neutral position of the direction-reversal control (6) to return the brake control (8) to the second braking position and drive means to displace the control brake (8) from the second braking position to the unbraked position, wherein these means for driving the brake control (8) are formed, at least partially, by the active-direction reversal control (6) on the brake control (8) upon meeting the return means (83) during the movement of the reversal control (6) from the neutral position to the forward or reverse position.

12. Transmission assembly according to claim 11, **characterized in that** the brake mechanism (7) comprises an additional control (9) that may be moved between an inactive position and an active position by the operator, wherein, during its movement to the second braking position of the brake control (8), this control (9) may interact with the brake control (8) in order to move the brake control (8) from the second braking position to the unbraked position.

13. Self-propelled machine (20) of the type comprising a primary motor shaft (21), wheels and a transmission assembly arranged between the primary motor shaft (21) and the wheels (22),
**characterized in that** the transmission assembly is according to one of the claims 1 to 12.
